# EUROPÄISCHE PATENTSCHRIFT

(11) **EP 1 175 291 B1**
(45) Veröffentlichungstag und Bekanntmachung des Hinweises auf die Patenterteilung: **12.02.2003**
(21) Anmeldenummer: 00929474.5
(22) Anmeldetag: 02.05.2000
(51) Int. Cl.: B29C 45/17, H02K 41/03, B29C 45/64

(54) **SPRITZGIESSMASCHINE ZUR VERARBEITUNG VON KUNSTSTOFFEN**
INJECTION MOLDING MACHINE FOR PROCESSING PLASTICS
PRESSE D'INJECTION POUR LA TRANSFORMATION DE MATIERES PLASTIQUES

(30) Priorität: 05.05.1999 DE 19920626
(43) Veröffentlichungstag der Anmeldung: 30.01.2002
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP0003923
(87) Internationale Veröffentlichungsnummer: WO00067984

(56) Entgegenhaltungen:
- EP-A- 0 280 743
- EP-A- 0 361 670
- DE-A- 3 715 161
- US-A- 6 051 896
- PATENT ABSTRACTS OF JAPAN vol. 1995, no. 02, 31. März 1995 (1995-03-31) -& JP 06 319250 A (OKUMA MACH WORKS LTD), 15. November 1994 (1994-11-15)

## Beschreibung

Die Erfindung betrifft eine Spritzgießmaschine zur Verarbeitung von Kunststoffen und anderer plastifizierbarer Massen, zu deren Betrieb wenigstens teilweise elektrisch betriebene Antriebseinheiten eingesetzt werden nach dem Oberbegriff des Anspruches 1.

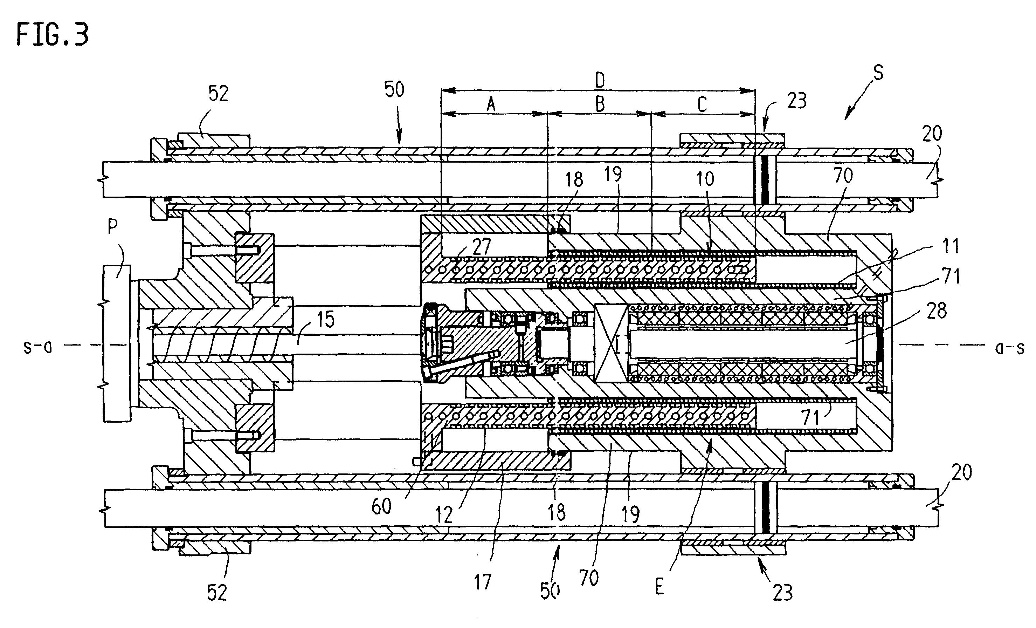

Aus der dem Oberbegriff des Anspruch 1 zugrundeliegenden DE-T2 37 82 817, entsprechend der EP 0 280 743 B1 und der JP-A 63-1516 ist an Kunststoff-Formmaschinen ein als Antriebseinheit eingesetzter Linearmotor mit Läufer und Stator bekannt, die über in Wirkverbindung stehende zylindrische Mantelflächen verfügen. Diese Mantelflächen ermöglichen, die für die erforderlichen Vorschubkräfte benötigte Magnetfläche sinnvoll in die Antriebsachsen zu integrieren. Werden die Statorwindungen nach der DE-A 44 45 283 symmetrisch angeordnet heben sich die verhältnismäßig hohen Lagerkräfte, die durch den Magnetismus hervorgerufen sind, gegenseitig auf. Aber selbst dort ist in der Beschreibung stets nur von einem Primärteil und einem Sekundärteil die Rede, die entsprechend zusammenwirken. Betrachtet man zusätzlich die dortige Figur 3, wird deutlich, dass es sich bei dem innen liegenden Rohr lediglich um ein Trägerrohr handelt, das ebenso wie das außen liegende Rohr weder Stator noch Läufer ist. Beim Einsatz eines derartigen Linearmotors erspart man sich gleichzeitig die aufwendigen verschleißanfälligen Umsetzmittel, um eine Rotationsbewegung in eine Linearbewegung umzusetzen, wie z.B. Getriebe, Spindel, Hebel und Zahnstangen (vgl. auch EP-A 744 815), allerdings lassen sich damit noch nicht die an einer Kunststoff-Spritzgießmaschine erforderlichen Kräfte in ausreichendem Umfang aufbringen.

Elektrische Antriebseinheiten werden vielfach auch in Verbindung mit Spritzgießmaschinen eingesetzt. So ist es z.B. aus der EP 0 662 382 bekannt, verschiedene Hohlwellenmotoren innerhalb der Spritzgießeinheit zum Einspritzen der plastifizierten Masse in die Spritzgießform und zum Anlegen der Düse an die Spritzgießform miteinander zu schachteln. Allerdings ist es hierzu aufwendig erforderlich, die von den Hohlwellenmotoren erzeugten Rotationsbewegungen in Translationsbewegungen umzusetzen. Da an der Spritzgießmaschine jedoch alle Achsen bis auf das Dosieren des zu plastifizierenden Materials mittels einer Förderschnecke Translationsachsen sind, empfiehlt sich der Einsatz derartiger Hohlwellenmotoren nur begrenzt.

Aus der Handhabungstechnik und Medizintechnik sind Linearmotoren bekannt, die jedoch nicht über ausreichende Vorschubkräfte verfügen, so daß die meist flächig angelegten Linearmotoren nicht für den Einsatz an einer Spritzgießmaschine geeignet sind. (Firmenbroschüre "New Linear Motors and its applications" der Firma Fanuc, erschienen in FANUC Tech. Rev.11 2, pp. 25-36 (Dezember,1998); Datenblatt Linearmotoren LinMot P der Sulzer Electronics AG Zürich.)

Ausgehend von diesem Stand der Technik liegt der vorliegenden Erfindung die Aufgabe zugrunde, an einer Spritzgießmaschine einen Linearmotor vorzusehen, der die an einer Spritzgießmaschine erforderlichen Vorschubkräfte auch aufbringen kann.

Diese Aufgabe wird durch eine Spritzgießmaschine mit den Merkmalen des Anspruches 1 gelöst.

Damit lassen sich verschiedene Zylinderflächen so ineinander schachteln, daß mehrere gleichwirkende Magnetflächen entstehen, die zur Erhöhung der Vorschubkräfte bis in einen Bereich beitragen, wie er an Kunststoff-Spritzgießmaschinen z.B. zur Aufbringung der Schließkraft erforderlich ist. Es wird dabei der vermeintliche Nachteil in Kauf genommen, dass der Linearmotor leichter verkanten kann, so dass an die Führung der Teile des Linearmotors höhere Präzisionsanforderungen zustellen sind. Dies wird jedoch durch den erreichbaren kompakteren Aufbau wieder wettgemacht.

Obwohl es im Stand der Technik bekannt ist, welche Kräfte an einer Spritzgießmaschine zur Herstellung von Spritzteilen erforderlich sind, wurden dort lediglich kreisförmigen Anordnungen mit konzentrischen Mantelflächen von Läufer und Stator vorgeschlagen, da der Fachmann wohl zu unrecht davon ausgegangen ist, dass eine entsprechende andere Anordnung nicht in geeignetem Umfang realisierbar ist. Um nämlich die Mantelflächen gemeinsam in Wirkverbindung zu betreiben, müssen diese mit entsprechender Präzision gearbeitet sein. Die für den Betrieb des Linearmotors erforderliche Präzision steigt dabei exponentiell mit zunehmendem Abstand zur Mittellinie der zylindrischen Mantelflächen an, so dass es um so leichter zu einem Verkanten des Linearmotors kommt, je grösser dieser Abstand ist, insbesondere wenn der Linearmotor kurz gehalten sein soll, um einen möglichst kompakten Aufbau der gesamten Spritzgießmaschine zu verwirklichen. Dies wird durch die bei hohen Kräften auftretenden hohen Temperaturen noch verstärkt. Dies mag wohl auch der Grund sein, dass sich Linearmotoren trotz ihrer Vorteile bis heute nicht auf dem Gebiet der Kunststoff-Spritzgießmaschinen durchgesetzt haben, da bisher noch nicht die entsprechenden Kräfte aufgebracht werden können.

Nach Anspruch 7 können in den Zylinderwandungen des Stators Kuhlkanäle angeordnet werden, so daß die durch den Strom hervorgerufene Erwärmung zuverlässig abgeführt werden kann. Das dabei verwendete Kühlmedium kann zugleich zur Temperierung anderer Bauteile an der Spritzgießmaschine eingesetzt werden.

Weitere Vorteile ergeben sich aus den Unteransprüchen sowie aus der folgenden Figurenbeschreibung.

Im folgenden wird die Erfindung an mehreren Ausführungsbeispielen erläutert, die in den beigefügten Figuren dargestellt sind. Es zeigen:
- Fig. 1: eine am stationären Formträger einer Formschließeinheit angelegte Spritzgießeinheit,
- Fig. 2: einen horizontalen Schnitt durch die Spritzgießeinheit im Bereich von Trägerblock und Einspritzbrücke,
- Fig. 2a: einen Schnitt nach Linie 2a-2a von Fig. 2,
- Fig. 3: einen Schnitt gemäß Fig. 2 in einer weiteren Ausführungsform,
- Fig. 4: einen vergrößerten Ausschnitt aus Fig. 3 im Bereich der Einspritzbrücke,
- Fig. 5: eine teilweise geschnittene Formschließeinheit in Seitenansicht,
- Fig. 6: einen vergrößerten Ausschnitt aus Fig. 5 im Bereich des beweglichen Formträgers,
- Fig. 7: einen 5-Punkt-Kniehebel einer Formschließeinheit in teilweise geschnittener Seitenansicht,
- Fig. 8: eine vergrößerte Darstellung eines der beiden 5-Punkt-Kniehebel gemäß Fig. 7,
- Fig. 9: eine Formschließeinheit mit einem Y-Kniehebel,
- Fig. 10: den vergrößerten Y-Kniehebel,
- Fig. 11: einen horizontalen Schnitt durch eine Spritzgießeinheit im Bereich von Trägerblock und Einspritzbrücke in einer weiteren Ausführungsform,
- Fig. 12: eine Formschließeinheit ziehenden Typs in teilweise geschnittener Seitenansicht,
- Fig. 13, 14: Darstellung gemäß Fig. 11 von Spritzgießeinheiten in zwei weiteren Ausführungsformen,
- Fig. 15: eine mit Verschlußdüse ausgestattete Spritzgießeinheit.

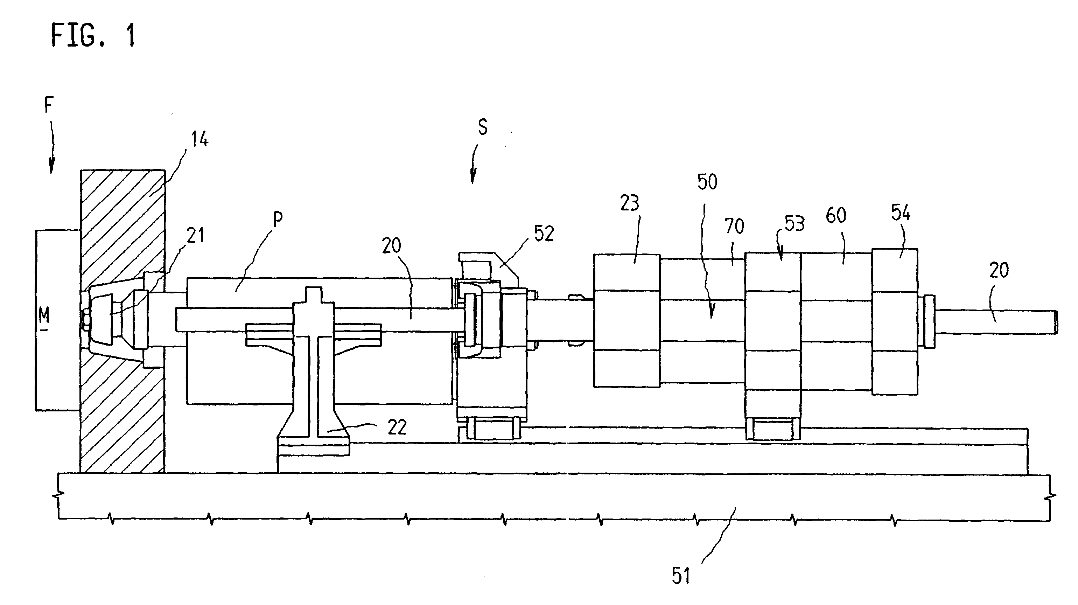

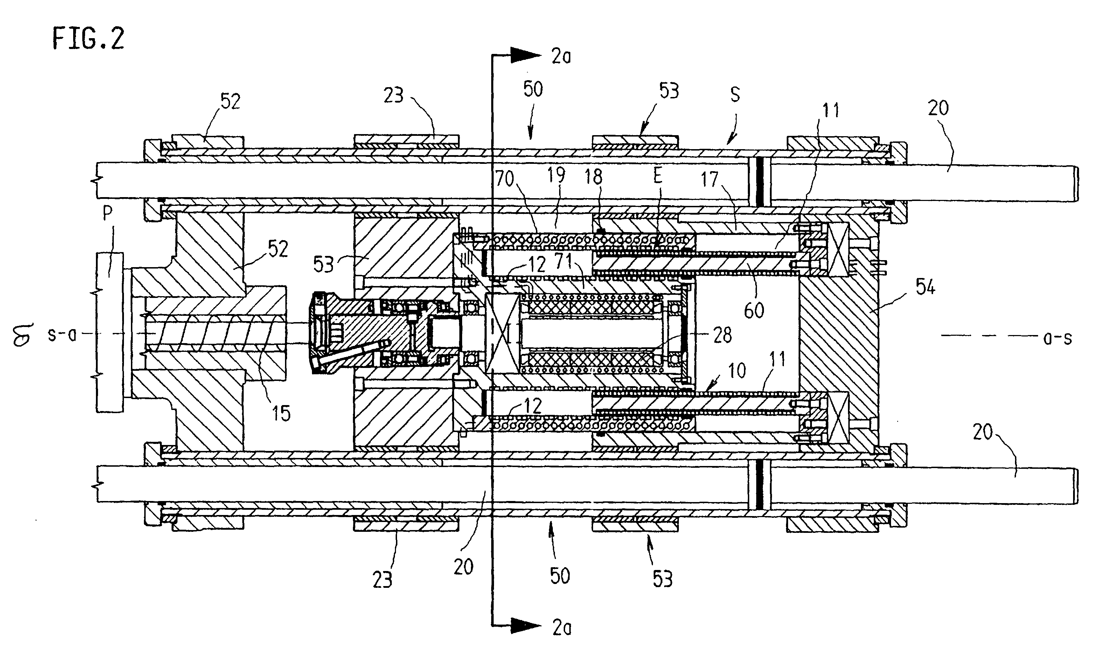

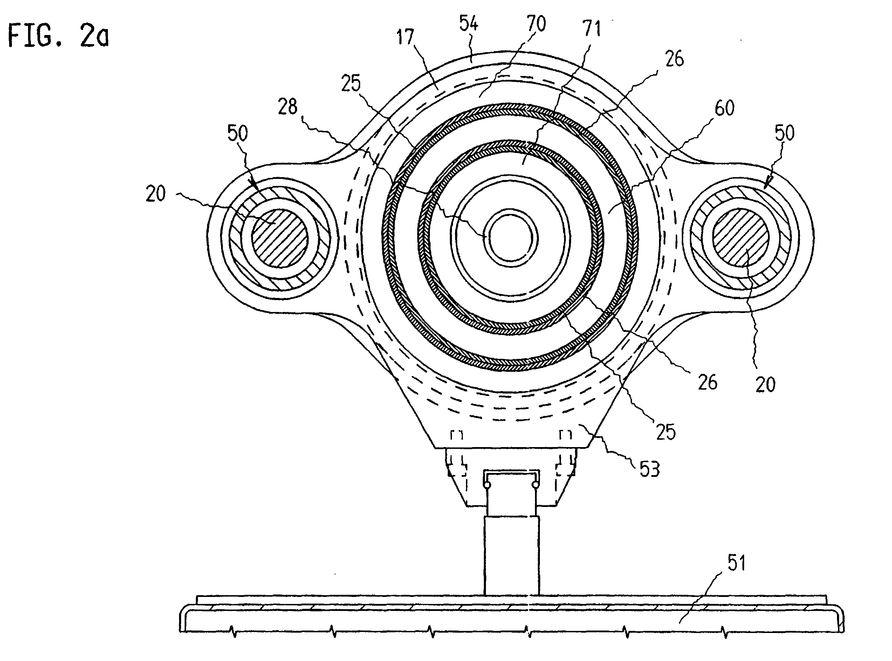

Fig. 1 zeigt zunächst die Spritzgießeinheit einer Spritzgießmaschine zur Verarbeitung von Kunststoffen und anderer plastifizierbarer Massen wie z.B. keramische oder metallische pulverförmige Massen. In der Spritzgießeinheit ist an einem Trägerblock 52 ein Plastifizierzylinder P aufgenommen. Im Plastifizierzylinder wird die plastifizierbare Masse plastifiziert und über eine Düse 21 in eine Spritzgießform M eingespritzt. Hierzu durchdringt die Düse 21 den stationären Formträger 14. Der vordere Teil der Spritzgießeinheit S ist über ein Stützteil 22 auf dem Maschinenfuß 51 abgestützt und über ein Führungselement 53 auf dem Maschinenfuß geführt und abgestützt. Um die Düse 21 an der Spritzgießform M anzulegen und bedarfsweise abzuheben, sind Düsenfahreinheiten 50 vorgesehen, die in Fig. 2 zunächst hydraulisch ausgebildet sind. Die Zylinder der hydraulischen Düsenfahrantriebe 50 bilden mit dem Trägerblock 52 und einem Abschluß 54 einen steifen Rahmen, der an Führungsholmen 20 geführt ist. Auf den Zylindern der Düsenfahrantriebe 50 ist das Führungselement 53 geführt.

Um plastifiziertes Material in die Spritzgießform einzuspritzen, ist eine Einspritzeinheit E vorgesehen. Bei Betätigung der Einspritzeinheit wird die Einspritzbrücke 23 und damit die Förderschnecke axial bewegt. Die Einspritzbrücke 23 trägt den Dosiermotor 28, mit dem ein Fördermittel 15, im Ausführungsbeispiel eine Förderschnecke, rotiert werden kann. Während der Dosiermotor 28 eine rotatorische Bewegung zum Drehen des Fördermittels 15 erbringen muß, sind zum Düsenfahren und zum Einspritzen translatorische Bewegungen erforderlich. Als elektrische Antriebseinheiten für diese translatorische Bewegungen wird ein Linearmotor eingesetzt, der einen Läufer mit entlang einer ersten zylindrischen Mantelfläche 11 angeordneten Magneten aufweist. Der Linearmotor besitzt ferner einen Stator mit entlang einer weiteren zylindrischen Mantelfläche 12 angeordneten Statorwindungen 26. Die zylindrischen Mantelflächen 11, 12 von Stator und Läufer sind konzentrisch angeordnet, so daß die Magnetfläche, die zur Erzeugung geeigneter Vorschubkräfte für Bewegungen an der Spritzgießmaschine erforderlich ist, erhöht werden kann. Damit sich die relativ hohen Lagerkräfte aufheben, werden nicht nur die kreisförmigen Mantelflächen vorgesehen, ergänzend sind die Statorwindungen 26 sowie vorzugsweise auch die Magneten 25 des Stators symmetrisch zur Bewegungsachse a-a des Linearmotors angeordnet. Fig. 2a zeigt die kreisförmigen Mantelflächen, die die Aufbringung entsprechender Kräfte aufgrund der an diesen Flächen erreichbaren Kräftedichte veranschaulicht.

In allen Ausführungsbeispielen werden unter dem Begriff Mantelflächen sowohl die äußere Mantelfläche eines Zylinders als auch die innere Mantelfläche eines Rohrs verstanden, in beiden Fällen handelt es sich um zylindrische Mantelflächen 11, 12. Die Magnete 25 können Permanentmagnete aber auch fremderregte Spulen mit Eisenkern sein. Ferner kann die Antriebseinheit gesteuert oder geregelt betrieben werden, also z.B. über eine Regelstrecke als Servomotor betrieben werden.

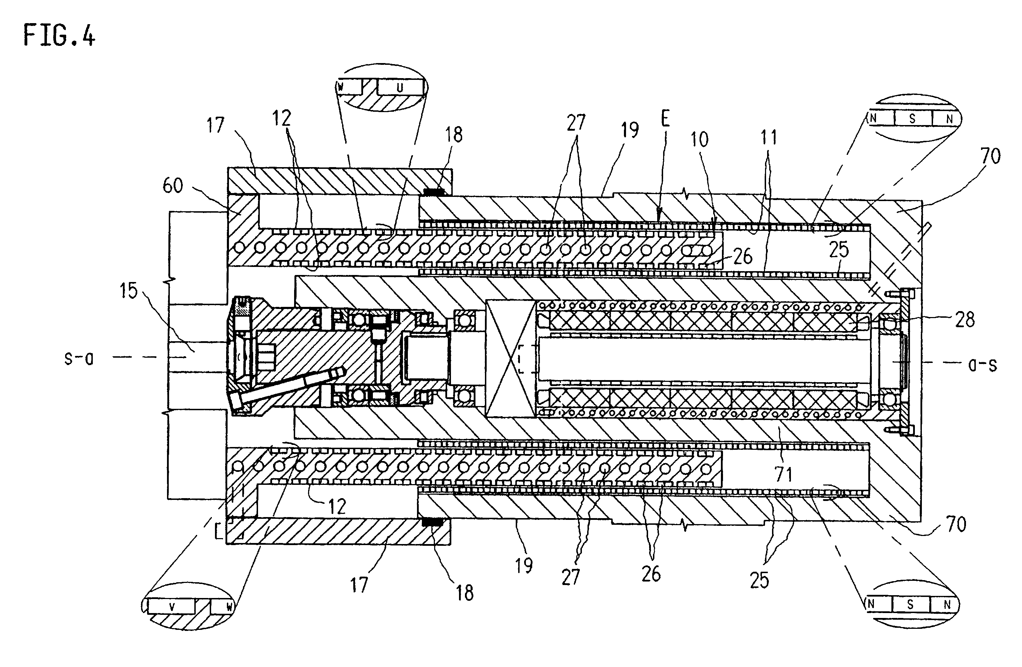

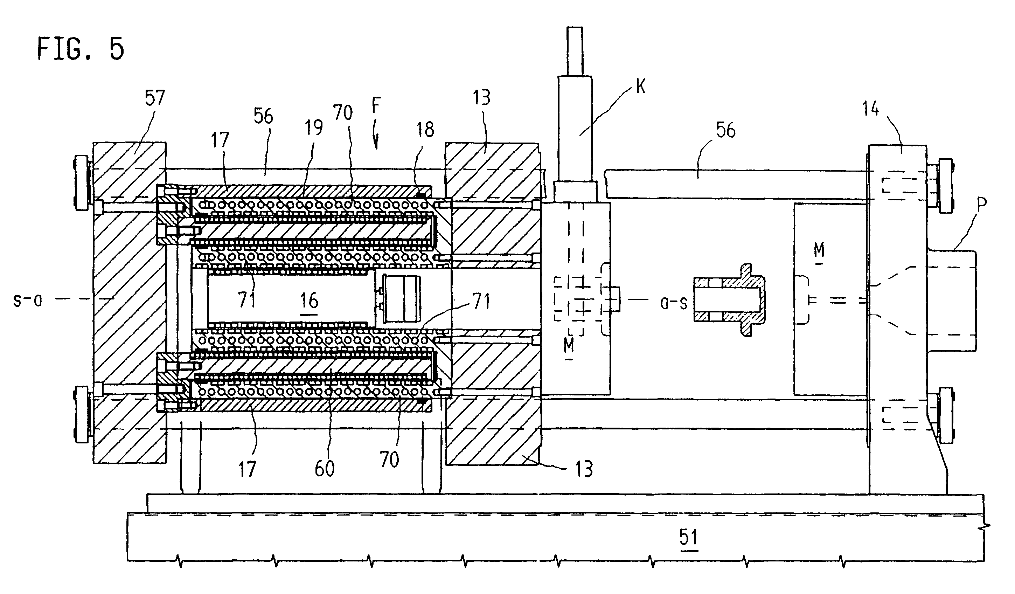

Bei den in Fign. 1 und 4 dargestellten Spritzgießeinheiten sind die Linearmotoren der Einspritzeinheit so angeordnet, daß die Bewegungsachse a-a des Linearmotors zugleich die Spritzachse s-s der Spritzgießeinheit S ist. Bei Übertragung auf die Formschließeinheit gemäß den Fign. 5-8 (s.u.) ist die Bewegungsachse a-a des Linearmotors zugleich die Symmetrieachse s-s der Formschließeinheit F. Zur Vereinfachung wird in beiden Fällen dieselbe Kennzeichnung s-s verwendet und auch im übrigen sind die Bezugszeichen in den Zeichnungen so gewählt, daß gleichwirkende Teile mit gleichen Bezugszeichen versehen sind.

Zur Erzeugung der notwendigen Vorschubkräfte werden die Zylinderflächen geschachtelt angeordnet. Fig. 2, 2a zeigen, wie mehrere gleichwirkende erste Mantelflächen 11 mit einer entsprechenden Anzahl weiterer Mantelflächen 12 für die Einspritzbewegung geschachtelt sind. Am Abschluß 54, der sich infolge der Verbindung über die Düsenfahreinheit 50 gemeinsam mit dem Trägerblock 52 bewegt, ist ein Zylinder 60 abgestützt, der auf seiner Innenseite und auf seiner Außenseite über gleichwirkende Mantelflächen verfügt. Es kann dahingestellt bleiben, ob diese Mantelflächen erste Mantelflächen des Läufers oder weitere Mantelflächen des Stators sind. Im Ausfürungsbeispiel sind die Mantelflächen des Zylinders 60 erste Mantelflächen des Läufers. Diese Mantelflächen werden von gleichwirkenden weiteren bzw. ersten Mantelflächen zweier konzentrischer Zylinder 70, 71 gebildet. Äußerlich betrachtet ergibt sich der Eindruck, als würden Kolbenstange und Zylinder einer Kolben-Zylinder-Einheit ineinander eintauchen. Die Mantelflächen sind so angeordnet, daß die innere Mantelfläche des äußeren Zylinders 70 mit der Außenseite des Zylinders 60 und die äußere Mantelfläche des inneren Zylinders 71 mit der Innenseite des Zylinders 60 zusammenwirkt. Durch diese Schachtelung läßt sich eine höhere Vorschubkraft als bisher üblich erzeugen.

Um den Linearmotor vor Verschmutzung zu schützen und bedarfsweise einen Raum zu erzeugen, der mit einem geeigneten Schmiermittel versehen werden kann, bewegt sich gemeinsam mit dem Zylinder 60 und insofern ebenso wie der Zylinder 60 mit dem Abschluß 54 verbunden, ein weiterer Zylinder 17. Dieser Zylinder 17 übergreift den Linearmotor und besitzt an seinem vorderen Ende in Fig. 2 links eine Lagerung 18, die mit einer Lagerfläche 19 des Zylinders 70 zusammenwirkt. Über Lagerung 18 und Lagerfläche 19 werden die Teile der Linearmotoren aneinander geführt und damit die Teile der Spritzgießmaschine zentriert, um eine für die Herstellung qualitativ hochwertiger Teile erforderliche Präzision sicherzustellen. Gleichzeitig wirken Lagerung 18 und Lagerfläche 19 abdichtend.

Werden die Statorwindungen der konzentrischen Zylinder 70, 71 unter Strom gesetzt, ergibt sich im Zusammenspiel mit dem Magneten des Zylinders 60 eine Vorschubbewegung. Während der Zylinder 60 unverändert stehenbleibt, werden die konzentrischen Zylinder 70, 71 gemeinsam mit der Einspritzbrücke 23 bewegt. Fig. 3 zeigt eine weitere Ausführungsform der Spritzgießeinheit S, wobei eine Umkehrung von Zylinder 60 und konzentrischen Zylindern 70, 71 stattgefunden hat. Am Trägerblock 52 ist der Zylinder 60 befestigt, mit dem die Zylinder 70 und 71 zusammenwirken, die nun Bestandteil der Einspritzbrücke 23 sind. Die Umkehrung bedingt eine Umkehrung von Läufer und Stator. War im ersten Ausführungsbeispiel der Zylinder 60 der Läufer, so ist er jetzt der Stator. Die Einspritzbrücke 23 gleitet auch hier auf den Zylindern der hydraulischen Düsenfahreinheit, allerdings liegt nicht wie im ersten Fall ein Rahmen vor, der die Spritzgießeinheit S in sich versteift. Der weitere Zylinder 17 lagert den Linearmotor mittels Lagerung 18 und im Zusammenwirken mit der Lagerfläche 19.

Gemäß Fig. 3 können die Statorwindungen 26 entlang ihrer Bewegungsachse a-a in mehrere gesonderte elektrische Schaltzonen aufgeteilt sein. Der gesamte Bewegungsbereich wird durch den Bereich D verdeutlicht. Bei Bewegung sind beim Einspritzen vor allem gegen Ende alle Schaltzonen A, B, C beteiligt, um unter Mitwirkung aller Schaltzonen die erforderlichen Kräfte aufbringen zu können. Sobald jedoch eine bestimmte Zone mit ihrer Fläche nicht mehr in Wirkverbindung mit den Mantelflächen des Läufers ist, können zur Energieeinsparung die nicht mehr beanspruchten Zonen abgeschaltet werden.

In den Zylinderwandungen des Stators sind den Statorwindungen 26 aus Sicht der Magnete 25 hinter oder neben den Statorwindungen liegende Kühlkanäle 27 zugeordnet, so daß die durch den Strom hervorgerufene Erwärmung zuverlässig abgeführt werden kann. Das verwendete Kühlmedium kann zugleich zur Temperierung anderer Bauteile an der Spritzgießmaschine eingesetzt werden.

Der vergrößerte Ausschnitt gemäß Fig. 4 zeigt, daß die Magnete 25 auch an den Wandungen der Zylinder 70, 71 angebracht sind. Die Magnete sind mit den Kennzeichnungen für ihre Pole Nord-Süd (N-S) gekennzeichnet. Die Statorwindungen 26 hingegen sind mit U-V gekennzeichnet. Die im Wesentlichen durch die konzentrischen Zylinder 70, 71 gebildete Einspritzbrücke hat in ihrer Mitte, also in der Mitte des Zylinders 71 ausreichend Raum, um den Dosiermotor 28 sowie die Verriegelungseinrichtung für das Fördermittel 15 zu lagern.

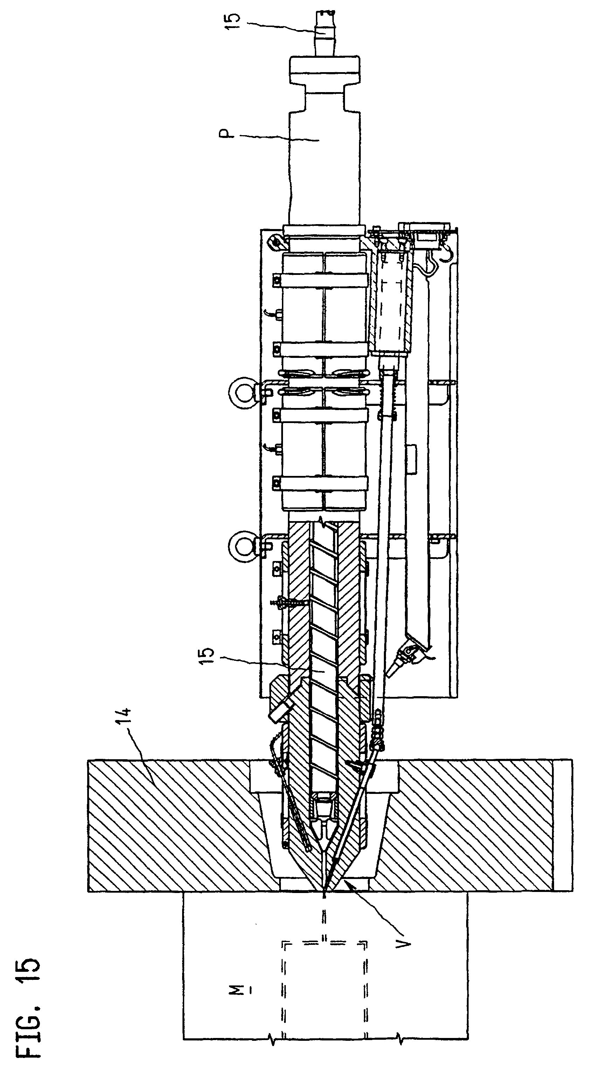

Der Linearmotor als elektrische Antriebseinheit kann auch an anderen Baugruppen der Spritzgießmaschine verwendet werden. Es bietet sich an, insbesondere die Translationsachsen mit Linearmotoren auszustatten. Spritzgießseitig sind dies die Antriebseinheit zum Anlegen der Düse 21 an die Spritzgießform sowie die bereits erläuterten Einspritzmittel E oder der Betätigungsmechanismus einer Verschlußdüse V (Fig. 15). Auf der Seite der Formschließeinheit F ist dies z.B. der Schließmechanismus zum Bewegen des beweglichen Formträgers 13 auf den stationären Formträger 14 zu und von diesem weg, der bedarfsweise die Schließkraft aufbringen kann. Ist die Formschließeinheit so aufgebaut, daß der Schließmechanismus nur die Formschlußbewegung durchführt, während die Schließkraft durch eine gesonderte Einrichtung aufgebracht wird, kann diese gesonderte Einrichtung mit einem Linearmotor versehen sein. Auf der Formschließseite kann auch eine Auswerfereinheit 16 oder eine Kernzugeinheit K (Fig. 5) an der Spritzgießform M mit einem Linearmotor ausgestattet werden.

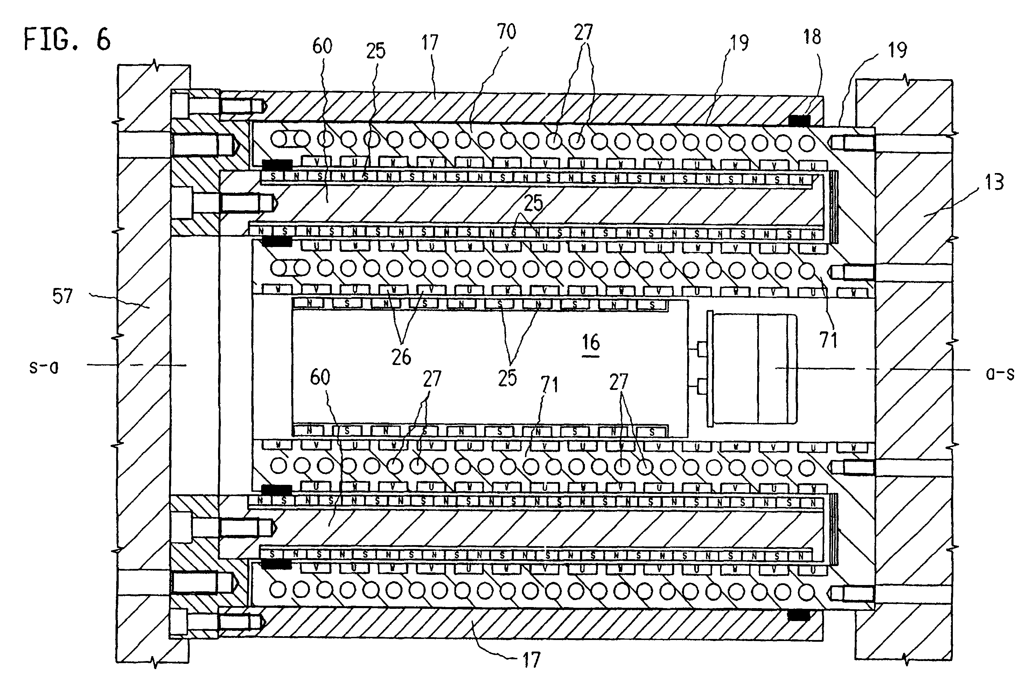

Fig. 5 zeigt eine Formschließeinheit F, wobei der bewegliche Formträger 13 entlang von Führungsholmen 56 mittels des Schließmechanismus bewegt wird. Bei Bewegung wird die Spritzgießform M wechselweise geschlossen und geöffnet. Der Schließmechanismus stützt sich an einem Abstützelement 57 ab. Fig. 6 zeigt einen vergrößerten Ausschnitt von Fig. 5 im Bereich des beweglichen Formträgers. Auch hier ist ein vergleichbarer Aufbau wie zuvor bei der Spritzgießeinheit zu erkennen. Ein Zylinder 60 mit Innen- und Außenseite ist der Läufer mit dem Magneten 25. Der bewegliche Formträger hingegen trägt die konzentrischen Zylinder 70, 71 als Stator. Am Abstützelement 57 ist der Zylinder 60 und der weitere Zylinder 17 befestigt, der mit der Lagerung 18 auch hier an der Lagerfläche 19 gelagert und geführt ist. Im Ausführungsbeispiel sind also auch hier verhältnismäßig große Zylinder ineinandergeschachtelt. Im Innern des Zylinders 71 ist ausreichend Raum zur Aufnahme einer Auswerfereinheit 16, die ebenfalls als Linearmotor betätigt wird. Es ergibt sich damit eine äußerst kurze Bauweise.

Falls erwünscht, können aber auch mehrere einzelne Zylinder um die Schließachse s-s geschachtelt und/oder konzentrisch angeordnet werden, die insofern dann gleichwirkend betrieben werden.

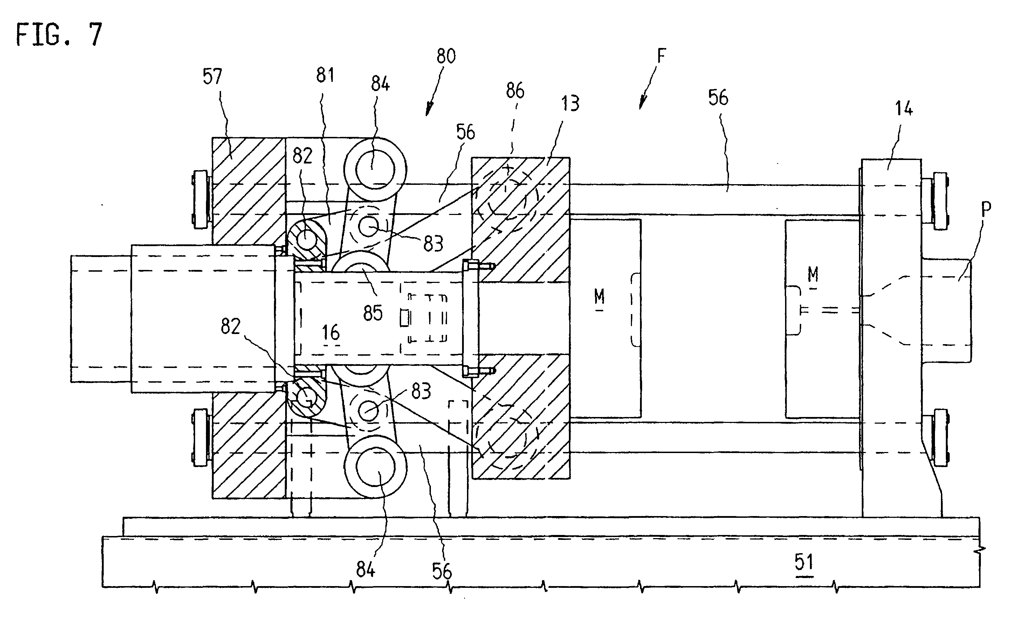

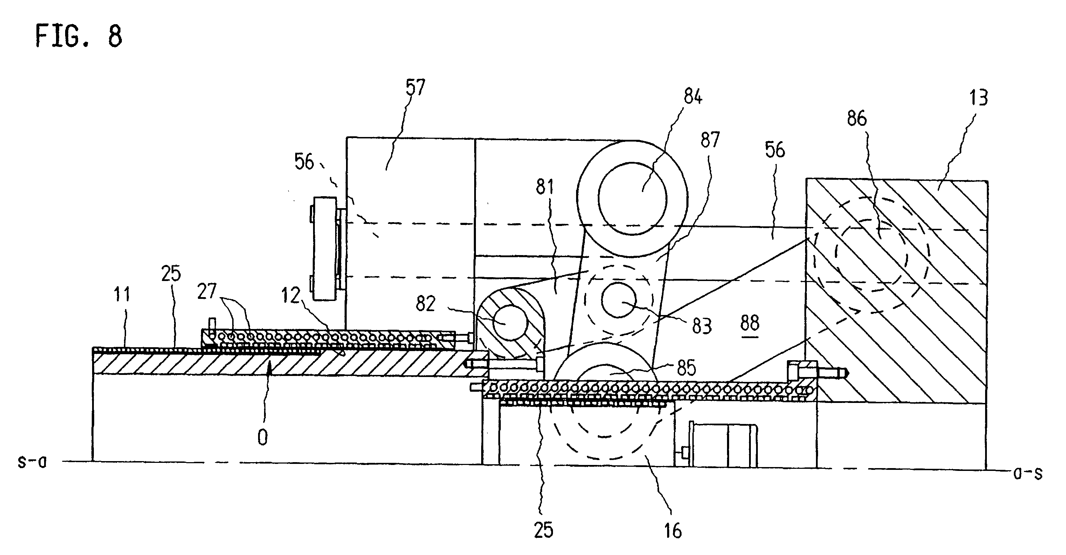

Der Linearmotor kann auch für andere Arten von Schließmechanismen eingesetzt werden, wobei im folgenden teilweise auf die Darstellung der Schachtelung zu Erreichung einer klaen Darstellung verzichtet wurde. Die Fign. 7 und 8 zeigen einen Schließmechanismus mit einem Mehr-Punkt-Kniehebel, hier einem 5-Punkt-Kniehebel. Der bewegliche Formträger ist an Führungsholmen 56 geführt und mittig im beweglichen Formträger ist eine Auswerfereinheit über einen Linearmotor anzusteuern. Fig. 8 zeigt den Aufbau des 5-Punkt-Kniehebels 80. Der Kniehebel stützt sich am Abstützelement 57 mit dem Gelenk 84 ab. Mit dem Gelenk 86 stützt er sich am beweglichen Formträger 13 ab. Die Gelenke 84 und 86 sind über zwei Arme 87, 88 miteinander verbunden, die ihrerseits wiederum am Gelenkpunkt 85 miteinander gelenkig verbunden sind. Am Arm 87 ist ein Gelenkpunkt 83 für einen Gelenkarm 81 vorgesehen. Dieser steht am Gelenkpunkt 82 mit der Antriebseinrichtung in Verbindung. Wird die Antriebseinrichtung linear entlang der Schließachse bewegt, drückt der Arm 81 den Arm 87 auf einem Kreisbogen nach vorne und dann nach oben. Die Arme 87, 88 kommen dadurch in Strecklage und werden an einem Zurückweichen durch Selbsthemmung unterstützt durch den Arm 81 gehindert. Der Vorteil dieser Ausführungsform ist, daß in Strecklage keine Kraft am Arm 81 aufgebracht werden muß, um die Strecklage beizubehalten. Dies ist von Vorteil, da bei der Linearbewegung auch die Überdeckung der zylindrischen Mantelflächen 11, 12 abnimmt, so daß gegen Ende der Bewegung die vom Linearmotor erzeugte Kraft geringer ist. Fig. 8 zeigt ferner, daß der Linearmotor für die Auswerfereinheit 16 bis in den Zylinder des Linearmotors des Schließmechanismus O zurückgeführt werden kann.

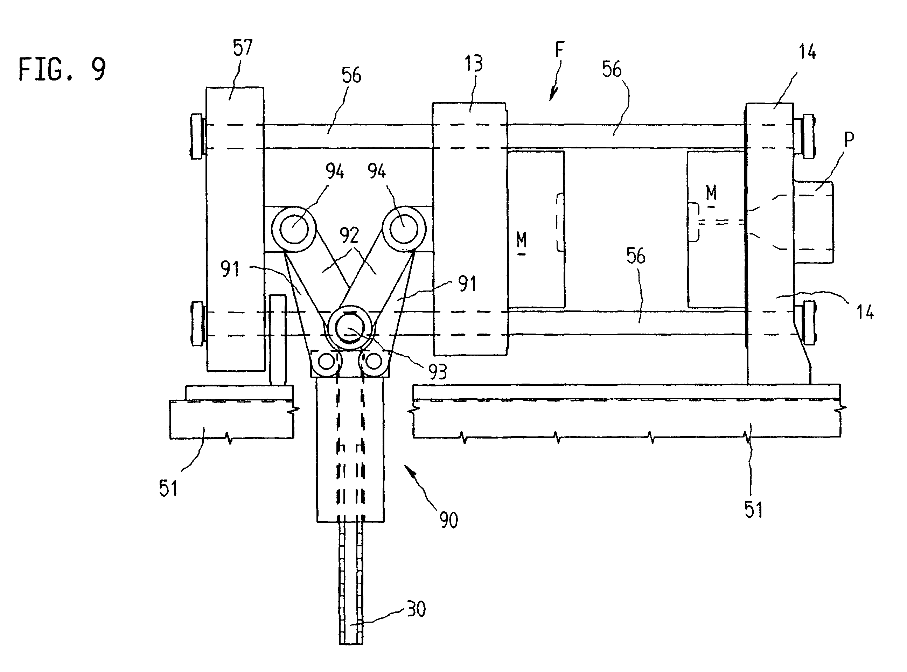

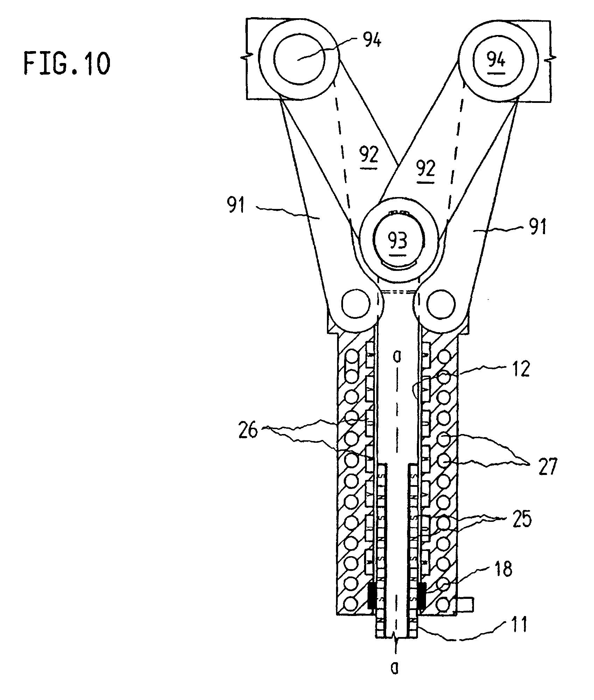

Eine weitere Art Schließmechanismus ist der Y-Kniehebel gemäß Fig. 9, 10, der im übrigen wie die bisher beschriebenen Formschließeinheiten F aufgebaut ist. Der Y-Kniehebel 90 stützt die Antriebseinheit dadurch ab, daß er über zwei Gelenkarme 91 diese frei beweglich aufhängt. Wird der Läufer 30 bewegt, greift dieser am Gelenkpunkt 93 an und bringt die Arme 92 in Strecklage. Auch hier ist in Strecklage eine verhältnismäßig geringe Kraft aufzubringen. Der Läufer 30 kann so ausgebildet werden, daß er beim Aufbringen einer geringen Kraft nur wenig mit den Mantelflächen des Stators zusammenwirkt, während beim Aufbringen einer hohen Kraft ein vollflächiges Zusammenwirken der Mantelflächen 11, 12 bewirkt wird.

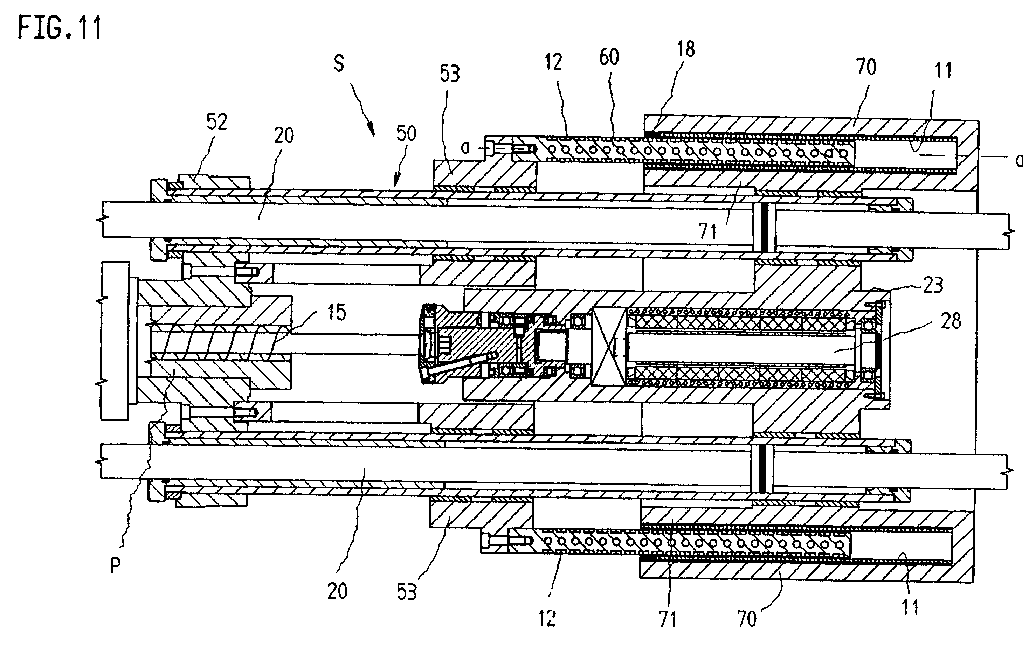

Damit ist angedeutet, daß grundsätzlich die zylindrischen Mantelflächen so angeordnet sein können, daß dann, wenn eine hohe Kraft aufgebracht werden muß, auch eine hohe Überdekkung der Mantelflächen 11, 12 vorliegt, so daß infolge einer großen Anlagefläche auch eine hohe Kraft erzeugt wird. Dies wird anhand der Fig. 11 für eine Spritzgießeinheit S erläutert. Der Linearmotor wird als Einspritzmittel E verwendet, wobei die Überdeckung der zylindrischen Mantelflächen 11, 12 beim Anlegen der Düse an die Spritzgießform M zunimmt. Dies wird erreicht, indem sich der Zylinder 60 am Trägerblock abstützt. Der Zylinder 60 ist hier der Stator. Um die Einspritzbrücke zu bewegen, werden die Zylinder 70, 71 über den Zylinder 60 gezogen, so daß beim Einspritzen eine höhere Kraft entsteht, je weiter die Förderschnecke in Richtung auf die Spritzgießform bewegt wird. Die Einspritzbrücke 23 bewegt sich also in Fig. 11 nach links.

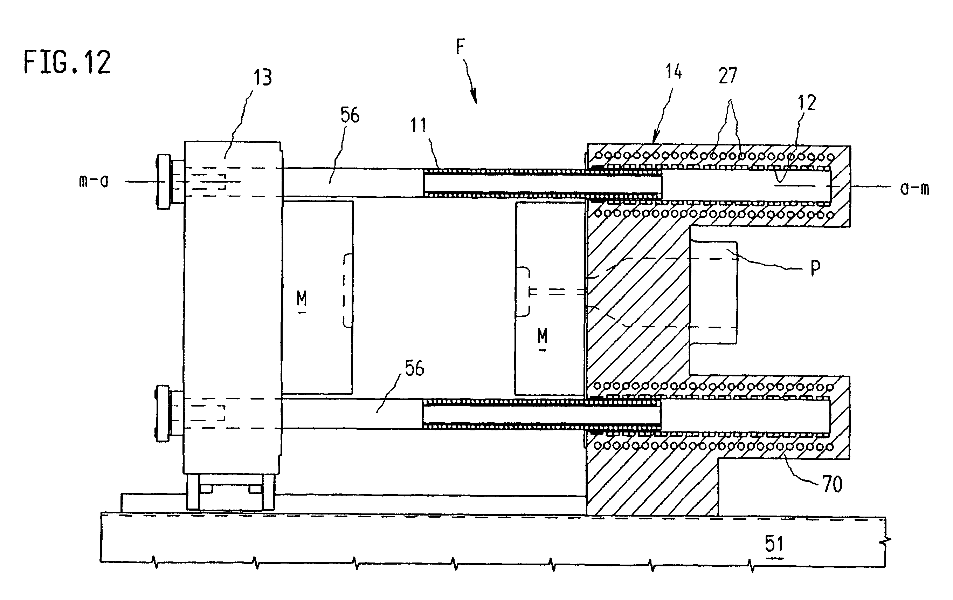

Das gleiche Prinzip läßt sich auch bei der Formschließeinheit verwirklichen. Fig. 12 zeigt einen Linearmotor als Schließmechanismus, wobei die Überdeckung der zylindrischen Mantelflächen 11, 12 beim Aufbringen der Schließkraft zunimmt. Es handelt sich um eine Formschließeinheit, bei der der bewegliche Formträger auf den stationären Formträger 14 gezogen wird. Im Ausführungsbeispiel sind die Holme 56 am stationären Formträger nicht fest gelagert. Sie sind in diesem Bereich mit den ersten Mantelflächen ausgestattet. Wird der Stator am stationären Formträger betätigt, wird der Läufer in den Linearmotor gezogen, so daß sich mit zunehmender Schließbewegung der Spritzgießform M eine größere Überdeckung der Mantelflächen ergibt und es zur höchsten Kraft am Ende der Formschlußbewegung kommt Fig. 12 zeigt ferner, daß der Linearmotor mit seiner Bewegungsachse a-a mit der Mittelachse des Holms 56 zusammenfällt.

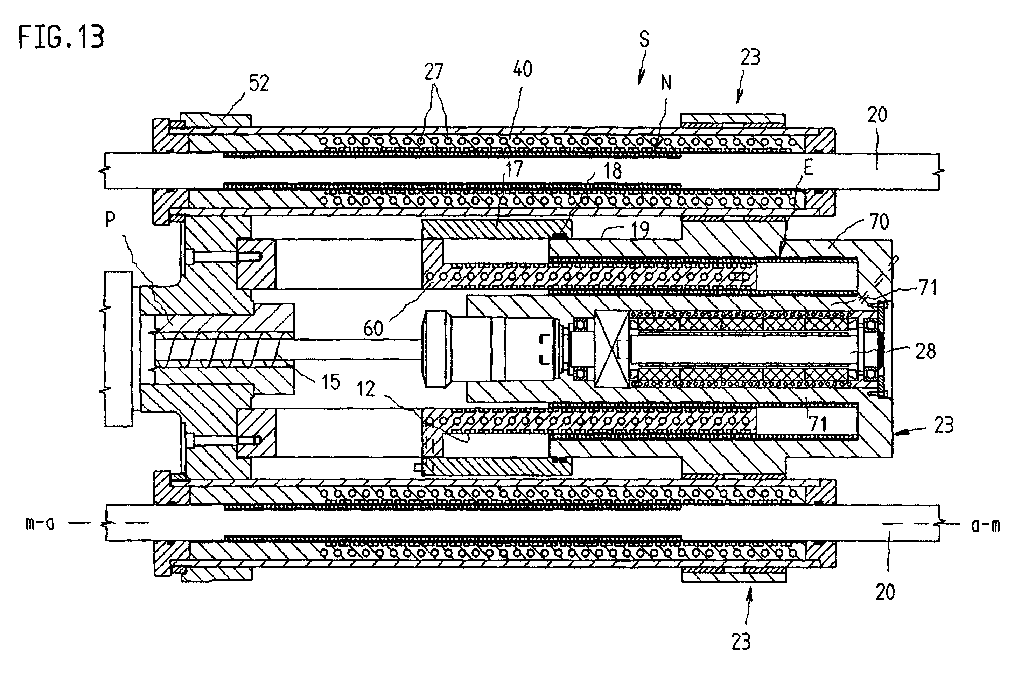

Fig. 13 zeigt bei sonst gleichem Aufbau wie in Fig. 3, daß auch die Düsenfahreinheit, die in Fig. 3 hydraulisch war, als Linearmotor ausgebildet werden kann. Die Holme 20 sind insofern mit Magneten ausgestattet, so daß sie als Läufer des Düsenfahrantriebs N dienen können. Sie wirken mit einem Stator zusammen, der auf den Holmen 20 gleitet. Durch diesen Aufbau ist eine entsprechende Bewegung entlang den Holmen 20 möglich.

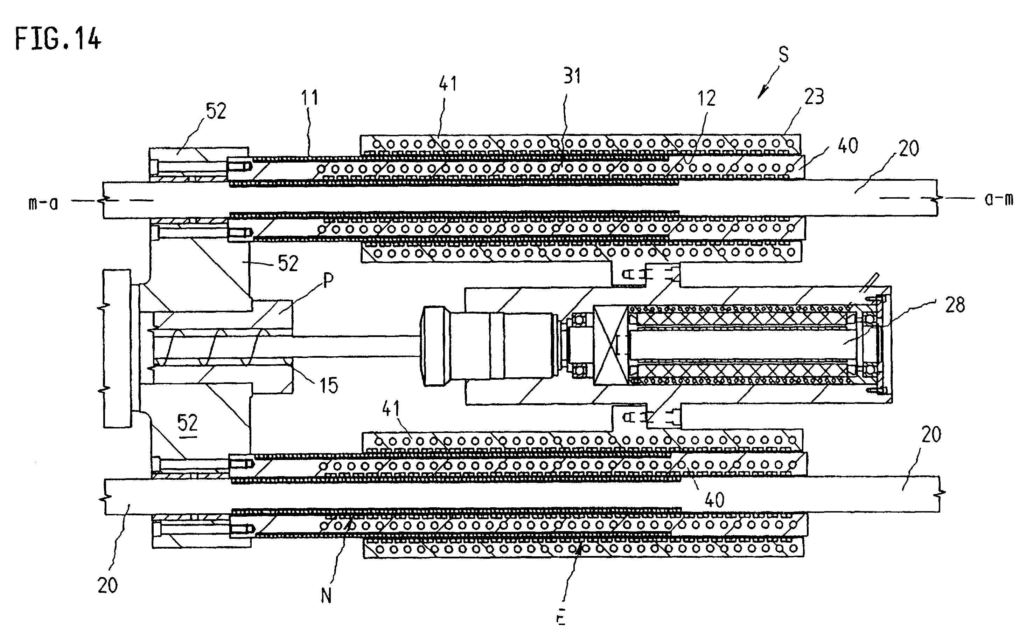

In einem weiteren Ausführungsbeispiel zeigt Fig. 14, daß auch an der Spritzgießeinheit die Bewegungsachse a-a des Linearmotors mit der Mittelachse der Führungsholme 20 zusammenfallen kann. In diesem Ausführungsbeispiel ist eine Schachtelung von Einspritzmittel und Düsenfahrantrieb N um die Holme 20 herum aufgebaut. Um den Holm 20 herum liegt zunächst die Düsenfahreinheit N. Der Führungsholm ist der Läufer, während eine Hülse den Stator 40 darstellt. Diese Hülse ist innenseitig Stator und außenseitig bereits wiederum Läufer mit Magneten für die Einspritzmittel E. Um die Hülse herum wird daher eine weitere Hülse als Stator 41 gelegt, die ihrerseits zugleich die Einspritzbrücke 23 ist. Die Einspritzbrücke schließlich trägt den Dosiermotor 28.

### Liste der Bezugszeichen

- 11: zylindrische Mantelfläche
- 12: weitere zylindrische Mantelfläche
- 13: beweglicher Formträger
- 14: stationärer Formträger
- 15: Fördermittel
- 16: Auswerfereinheit
- 17: weiterer Zylinder
- 18: Dichtung
- 19: Dichtfläche
- 20: Führungsholm S
- 21: Düse
- 22: Stützelement
- 23: Einspritzbrücke
- 24: Tragteil
- 25: Permanentmagnet
- 26: Statorwindung
- 27: Kühlkanal
- 28: Dosiermotor
- 30: Läufer
- 40, 41: Stator
- 50: hydraulische Düsenfahreinheit
- 51: Maschinenfuß
- 52: Trägerblock
- 53: Führungselement
- 54: Abschluß
- 56: Führungsholm F
- 57: Abstützelement
- 60: Zylinder
- 70, 71: konzentrischer Zylinder
- 80: 5-Punkt-Kniehebel
- 81: Arm
- 82, 83, 85: Gelenkpunkt
- 84, 86: Gelenk
- 87, 88: Arm
- 90: Y-Kniehebel
- 91: Stützarm
- 92: Arm
- 93: Angriffspunkt
- 94: Gelenkpunkt

- a-a: Bewegungsachse
- m-m: Mittelachse
- s-s: Symmetrieachse bzw. Spritzachse
- A, B, C: Schaltzonen
- D: gesamter Bereich
- E: Einspritzmittel
- F: Formschließeinheit
- K: Kernzugeinheit (Fig. 5)
- M: Spritzgießform
- N: Düsenfahrantrieb
- O: Schließmechanismus
- P: Plastifizierzylinder
- S: Spritzgießeinheit
- V: Verschlußdüse (Fig. 15)

## Patentansprüche

1. Spritzgießmaschine zur Verarbeitung von Kunststoffen und anderer plastifizierbarer Massen mit einer Spritzgießeinheit (S) und einer Formschließeinheit (F), die zumindest teilweise von elektrischen Antriebseinheiten in Form wenigstens eines Linearmotors betrieben sind, der einen Läufer mit entlang einer ersten zylindrischen Mantelfläche (11) angeordneten Magneten (25) und einen Stator mit entlang einer weiteren zylindrischen Mantelfläche (12) angeordneten Statorwindungen (26) aufweist, wobei die zylindrischen Mantelflächen (11,12) von Stator und Läufer konzentrisch angeordnet sind und die Statorwindungen (26) im wesentlichen symmetrisch zur Bewegungsachse (a-a) des Linearmotors sind, **dadurch gekennzeichnet, daß** mehrere gleichwirkende erste Mantelflächen (11) mit einer entsprechenden Anzahl gleichwirkender weiterer Mantelflächen (12) geschachtelt sind, wobei die ersten und/oder weiteren Mantelflächen jeweils gemeinsam in Wirkverbindung betreibbar sind.

2. Spritzgießmaschine nach Anspruch 1, **dadurch gekennzeichnet, daß** die Magnete Magneten oder fremderregte Spulen mit Eisenkern sind.

3. Spritzgießmaschine nach Anspruch 1, **dadurch gekennzeichnet, daß** die elektrische Antriebseinheit eine geregelte Servo-Antriebseinheit ist.

4. Spritzgießmaschine nach einem der Ansprüche 1 bis 3, **dadurch gekennzeichnet, daß** gleichwirkende erste bzw. weitere Mantelflächen die Außen- und Innenseite eines Zylinders (60) sind und daß gleichwirkende weitere bzw. erste Mantelflächen auf zwei konzentrischen Zylindern (70,71) so angeordnet sind, daß die innere Mantelfläche des äußeren Zylinders (70) mit der Außenseite und die äußere Mantelfläche des inneren Zylinders (71) mit der Innenseite des Zylinders (60) zusammenwirkt.

5. Spritzgießmaschine nach einem der Ansprüche 1 bis 4, **dadurch gekennzeichnet, daß** der Linearmotor zylindrisch ist und außenseitig von einem weiteren Zylinder (17) übergriffen ist, der mittels wenigstens einer Lagerung (18) die aufeinander bewegten Flächen von Läufer und Stator an einer gesonderten Lagerfläche (19) führt.

6. Spritzgießmaschine nach einem der Ansprüche 1 bis 5, **dadurch gekennzeichnet, daß** die Statorwindungen (26) entlang der Bewegungsachse (a-a) in mehrere gesonderte elektrische Schaltzonen aufgeteilt sind.

7. Spritzgießmaschine nach einem der Ansprüche 1 bis 6, **dadurch gekennzeichnet, daß** den Statorwindungen (26) aus Sicht der Magnete (25) hinter oder neben den Statorwindungen liegende Kühlkanäle (27) zugeordnet sind, die mittels eines Kühlmediums temperierbar sind.

8. Spritzgießmaschine nach einem der Ansprüche 1 bis 7, **dadurch gekennzeichnet, daß** die elektrische Antriebseinheit, wenigstens eine der folgenden Baugruppen der Spritzgießmaschine ist:
- Schließmechanismus zum Bewegen des beweglichen Formträgers (13) auf den stationären Formträger (14) zu und von diesem weg und zum bedarfsweisen Aufbringen der Schließkraft,
- Einrichtung zum Aufbringen der Schließkraft,
- Antriebseinheit zum Anlegen der Düse (21) an der Spritzgießform (M),
- Einspritzmittel zum axialen Bewegen des Fördermittels (15),
- Auswerfereinheit (16)
- Kernzugeinheit (K) an der Spritzgießform (M)
- Antriebseinheit einer Verschlußdüse (V).

9. Spritzgießmaschine nach einem der Ansprüche 1 bis 8, **dadurch gekennzeichnet, daß** der Linearmotor als Schließmechanismus verwendet wird und daß im Innern des inneren Zylinders (71) Raum zur Aufnahme einer Auswerfereinheit (16) ist.

10. Spritzgießmaschine nach einem der Ansprüche 1 bis 9, **dadurch gekennzeichnet, daß** der Linearmotor als Einspritzmittel (E) verwendet wird, wobei die Überdeckung der zylindrischen Mantelflächen (11,12) beim Verfahren des Fördermittels (15) an die Spritzgießform (M) zunimmt.

11. Spritzgießmaschine nach einem der Ansprüche 1 bis 10, **dadurch gekennzeichnet, daß** der Linearmotor als Schließmechanismus verwendet wird, wobei die Überdeckung der zylindrischen Mantelflächen (11,12) bei Annäherung der Teile der Spritzgießform (M) aneinander zunimmt.

## Claims

1. Injection moulding machine for processing plastics materials and other plasticisable compounds, having an injection moulding unit (S) and a mould closing unit (F), which units are operated at least partially by electric driving units in the form of at least one linear motor, which has a rotor with magnets (25), disposed along a first cylindrical surface (11), and a stator with stator windings (26) disposed along an additional cylindrical surface (12), the cylindrical surfaces (11,12) of stator and rotor being concentrically disposed, and the stator windings (26) being substantially symmetrical relative to the axis of movement (a-a) of the linear motor, **characterised in that** a plurality of identically acting first surfaces (11) are stacked with a corresponding number of identically acting additional surfaces (12), the first and/or additional surfaces each being operable jointly in operative connection.

2. Injection moulding machine according to claim 1, **characterised in that** the magnets are magnets or separately excited coils with an iron core.

3. Injection moulding machine according to claim 1, **characterised in that** the electric driving unit is a regulated servo driving unit.

4. Injection moulding machine according to one of claims 1 to 3, **characterised in that** identically acting first or respectively additional surfaces are the outside and inside of a cylinder (60), and **in that** identically acting additional or respectively first surfaces are so disposed on two concentric cylinders (70,71) that the internal surface of the external cylinder (70) co-operates with the outside, and the external surface of the internal cylinder (71) co-operates with the inside of the cylinder (60).

5. Injection moulding machine according to one of claims 1 to 4, **characterised in that** the linear motor is cylindrical and is overlapped on the outside by an additional cylinder (17), which guides the faces of rotor and stator, which are moved towards one another, along a separate bearing face (19) by means of at least one mounting (18).

6. Injection moulding machine according to one of claims 1 to 5, **characterised in that** the stator windings (26) are divided along the axis of movement (a-a) into a plurality of separate electrical switching zones.

7. Injection moulding machine according to one of claims 1 to 6, **characterised in that** cooling ducts (27), which lie behind or adjacent the stator windings (26) when viewed from the magnets (25), are associated with said stator windings, which ducts have their temperature controlled by means of a cooling medium.

8. Injection moulding machine according to one of claims 1 to 7, **characterised in that** the electric driving unit is at least one of the following assemblies of the injection moulding machine:
- closing mechanism for moving the movable mould carrier (13) towards the stationary mould carrier (14) and away from said stationary carrier and for applying the closing force if necessary,
- arrangement for applying the closing force,
- driving unit for fitting the nozzle (21) onto the injection mould (M),
- injection means for axially moving the feeding means(15),
- ejector unit (16),
- core pulling unit (K) on the injection mould (M),
- driving unit for a closure nozzle (V).

9. Injection moulding machine according to one of claims 1 to 8, **characterised in that** the linear motor is employed as the closing mechanism, and **in that** there is space in the interior of the internal cylinder (71) to accommodate an ejector unit (16).

10. Injection moulding machine according to one of claims 1 to 9, **characterised in that** the linear motor is employed as the injection means (E), the covering of the cylindrical surfaces (11,12) increasing during displacement of the feeding means(15) to the injection mould (M).

11. Injection moulding machine according to one of claims 1 to 10, **characterised in that** the linear motor is employed as the closing mechanism, the covering of the cylindrical surfaces (11,12) increasing as the parts of the injection mould (M) approach one another.

## Revendications

1. Machine à mouler par injection pour le traitement de matières plastiques et autres masses plastifiables comportant une unité d'injection (S) et une unité de fermeture de moule (F) qui sont mises en fonction au moins partiellement par des unités électriques d'entraînement sous la forme d'au moins un moteur linéaire qui comporte un rotor avec des aimants (25) disposés le long d'une première surface de paroi cylindrique (11) ainsi qu'un stator avec des enroulements de stator (26) disposés le long d'une autre surface d'enveloppe cylindrique (12), les surfaces d'enveloppe cylindriques (11, 12) du stator et du rotor étant disposées concentriquement et les enroulements de stator (26) étant sensiblement symétriques par rapport à l'axe de déplacement (a-a) du moteur linéaire, **caractérisée en ce que** plusieurs premières surfaces d'enveloppe (11) d'action identique sont imbriquées avec un nombre correspondant d'autres surfaces d'enveloppe (12) d'action identique, les premières et/ou les autres surfaces d'enveloppe pouvant fonctionner ensemble en liaison active.

2. Machine à mouler par injection selon la revendication 1, **caractérisée en ce que** les aimants sont des aimants ou des bobines à excitation externe avec noyau en fer.

3. Machine à mouler par injection selon la revendication 1, **caractérisée en ce que** l'unité électrique d'entraînement est une servo-unité d'entraînement à régulation.

4. Machine à mouler par injection selon l'une des revendications 1 à 3, **caractérisée en ce que** des premières ou d'autres surfaces d'enveloppe d'action identique sont la face extérieure et la face intérieure d'un cylindre 60 et **en ce que** d'autres ou des premières surfaces d'enveloppe d'action identique sont disposées sur deux cylindres (70, 71) concentriques de manière que la surface d'enveloppe intérieure du cylindre extérieur (70) coopère avec la face extérieure et la surface d'enveloppe extérieure du cylindre intérieur (71) coopère avec la face intérieure du cylindre (60).

5. Machine à mouler par injection selon l'une des revendications 1 à 4, **caractérisée en ce que** le moteur linéaire est cylindrique et est recouvert sur son côté extérieur par un autre cylindre (17) qui, au moyen d'au moins un support (18), guide les surfaces déplacées l'une vers l'autre du rotor et du stator, sur une surface de support (19) séparée.

6. Machine à mouler par injection selon l'une des revendications 1 à 5, **caractérisée en ce que** les enroulements (26) du stator sont divisés, le long de l'axe de déplacement (a-a), en plusieurs zones électriques de commande séparées.

7. Machine à mouler par injection selon l'une des revendications 1 à 6, **caractérisée en ce qu'**aux enroulements (26) du stator sont associés des canaux de refroidissement (27) qui sont situés, par rapport aux aimants (25), derrière ou à côté des enroulements du stator et qui peuvent être tempérés au moyen d'un fluide de refroidissement.

8. Machine à mouler par injection selon l'une des revendications 1 à 7, **caractérisée en ce que** l'unité électrique d'entraînement est au moins l'un des groupes suivants de la machine à mouler par injection :
- mécanisme de fermeture pour déplacer le porte-moule mobile (13) vers le porte-moule fixe (14) et depuis celui-ci, et pour appliquer au besoin la force de fermeture,
- dispositif pour appliquer la force de fermeture,
- unité d'entraînement pour appliquer la buse (21) contre le moule d'injection (M),
- moyen d'injection pour le déplacement axial du moyen de transport (15),
- unité d'éjection (16),
- unité tire-noyau (K) sur le moule d'injection (M),
- unité d'entraînement d'une buse à obturation (V).

9. Machine à mouler par injection selon l'une des revendications 1 à 8, **caractérisée en ce que** le moteur linéaire est utilisé comme mécanisme de fermeture et **en ce qu'**à l'intérieur du cylindre intérieur (71) se trouve de la place pour recevoir une unité d'éjection (16).

10. Machine à mouler par injection selon l'une des revendications 1 à 9,
**caractérisée en ce que** le moteur linéaire est utilisé comme moyen d'injection (E), le recouvrement des surfaces d'enveloppe cylindriques (11, 12) augmentant pendant le déplacement du moyen de transport (15) sur le moule d'injection (M).

11. Machine à mouler par injection selon l'une des revendications 1 à 10, **caractérisée en ce que** le moteur linéaire est utilisé comme mécanisme de fermeture, le recouvrement des surfaces d'enveloppe cylindriques (11, 12) augmentant lorsque les parties du moule d'injection (M) se rapprochent l'une de l'autre.
